# EUROPEAN PATENT APPLICATION

(11) **EP 2 711 617 A2**
(43) Date of publication of application: **26.03.2014**
(21) Application number: 13164576.4
(22) Date of filing: 19.04.2013
(51) Int. Cl.: F21V 8/00

(54) **Backlight unit and display device having the same**

(30) Priority: 19.09.2012 KR 20120104122
(71) Applicant: Samsung Display Co., Ltd., Gyeonggi-Do (KR)
(72) Inventor: Lee, Sangwon, Seongnam-si, Gyeonggi-do 201-1303 (KR); Beak, Seungin, Seoul 118-15 (KR); Kim, Gicherl, Chungcheongnam-do 101-405 (KR); Kim, Rae-Young, Hwaseong-si, Gyeonggi-do D-1201 (KR); Ryu, Tae Yong, Hwaseong-si, Gyeonggi-do 853-10 (KR); Oh, Sunhee, Anyang-si, Gyeonggi-do 133-2002 (KR); Choi, Jinsung, Chungcheongnam-do 504-703 (KR)
(74) Representative: Dr. Weitzel & Partner

(57) **Abstract**

A display device includes a display panel and a backlight unit. The display panel alternately displays a left-eye image and a right-eye image during successive frame periods in a three-dimensional mode. The backlight unit includes a light source including a plurality of light emitting blocks and a light guide. The light guide includes a plurality of lenticular patterns formed on a first surface thereof and a plurality of light guide patterns formed on a second surface thereof. The lenticular patterns and the light guide patterns are extended in a first direction and arranged in a second direction crossing the first direction.

## Description

### CROSS-REFERENCE TO RELATED APPLICATION

This U.S. non-provisional patent application claims priority under 35 U.S.C. § 119 of Korean Patent Application No. 10-2012-0104122, filed on September 19, 2012, the contents of which are hereby incorporated by reference.

### BACKGROUND

### 1. Field of disclosure

The present disclosure relates to a backlight unit and a display device having the same. More particularly, the present disclosure relates to an edge-illumination type backlight unit and a display device having the edge-illumination type backlight unit.

### 2. Description of the Related Art

In general, a display device is classified into a transmissive type display device, a transflective type display device, and a reflective type display device. The transmissive and transflective type display devices include a display panel that displays an image and a backlight unit that provides light to the display panel.

The backlight unit includes a light source that emits the light and a light guide that guides the light from the light source to the display panel. The backlight unit is classified into an edge-illumination type backlight unit and a direct-illumination type backlight unit according to the position of the light source with respect to the light guide.

The light source includes a plurality of light emitting blocks, and each light emitting block includes at least one light emitting device.

### SUMMARY

The present disclosure provides a backlight unit capable of improving a tendency of rectilinear propagation of light emitted therefrom.

The present disclosure provides a display device capable of reducing a crosstalk.

Embodiments of the inventive concept provide a backlight unit may include a light source that includes a plurality of light emitting blocks; and a light guide that guides light provided from the light source and includes a first surface, a second surface facing the first surface, and a plurality of connection surfaces connecting the first surface and the second surface, at least one connection surface of the connection surfaces facing the light source. The first surface comprises a plurality of first lenticular patterns extended in a first direction and arranged in a second direction crossing the first direction, and the second surface comprises a plurality of light guiding second lenticular patterns extended in the first direction and arranged in the second direction.

The first lenticular patterns may have a first width and the plurality of light guiding patterns may have a second width smaller than the first width.

The first lenticular patterns may have a first height and the plurality of light guiding patterns may have a second height smaller than the first height.

The plurality of light guiding patterns may be second lenticular patterns and a perimeter of each of the second lenticular patterns may have a shape corresponding to an arc of an ellipse.

A width of the second lenticular pattern in one portion may be different from a width of the second lenticular pattern in another portion.

The second lenticular patterns may comprise a light exiting pattern to output the light to the first surface.

A height of the second lenticular pattern in one portion may be different from a height of the second lenticular pattern in another portion.

The second lenticular patterns may be spaced apart from each other in the second direction. The plurality of light guiding patterns may have a recessed portion from the second surface.

Each of the light guide patterns may have a prism shape.

A depth of the light guide pattern in one portion may be different from a depth of the light guide pattern in another portion.

The light guide patterns may be spaced apart from each other in the second direction.

The second surface may comprise a flat surface portion disposed between the light guide patterns and the flat surface portion may comprise a light exiting pattern to output the light to the first surface.

The light exiting pattern may be engraved.

Embodiments of the inventive concept provide a display device includes a light guide that guides a light provided from the light source and includes a first surface, a second surface facing the first surface, and a plurality of connection surfaces connecting the first surface and the second surface, at least one connection surface of the connection surfaces facing the light source; and a display panel that receives the guided light from the light guide and alternately displays a left-eye image and a right-eye image during successive frame periods in a three-dimensional mode. The first surface may comprise a plurality of lenticular patterns extended in a first direction and arranged in a second direction crossing the first direction, and the second surface comprises a plurality of light guide patterns extended in the first direction and arranged in the second direction.The light emitting blocks may be arranged in the second direction along the one connection surface.

The light emitting areas may be sequentially turned on in each frame period, and an i-th (i is an integer number equal to or larger than 2) light emitting block of the light emitting blocks may be turned on when an (i-1)th light emitting block of the light emitting blocks is turned off.

Each of the light guide patterns may be a lenticular pattern having a curved surface.

Each of the light guide patterns may be a prism pattern recessed from the second surface.

The light guide patterns prevent the incident light from being diffused. Accordingly, the tendency of rectilinear propagation of the light traveling through the corresponding light emitting area is improved. Thus, the crosstalk, in which the left-eye image and the right-eye image are substantially and simultaneously displayed, of the display device including the backlight unit, which emits the light with the improved tendency of rectilinear propagation , may be prevented.

### BRIEF DESCRIPTION OF THE DRAWINGS

The above and other advantages of the present invention will become readily apparent by reference to the following detailed description when considered in conjunction with the accompanying drawings wherein:
FIG. 1 is a perspective view showing a backlight unit according to an exemplary embodiment of the present invention;
FIGS. 2A to 2C are views showing portions of the backlight unit shown in FIG. 1;
FIGS. 3A and 3B are views explaining a tendency of rectilinear propagation of light incident into a light guide;
FIGS. 4A and 4B are views showing traveling paths of the light in a conventional backlight unit and a backlight unit according to an exemplary embodiment of the present invention;
FIG. 5 is a graph showing the tendency of rectilinear propagation of the light in the convention backlight unit and the backlight unit according to an exemplary embodiment of the present invention;
FIGS. 6A to 6E are views showing portions of the backlight unit according to an exemplary embodiment of the present invention;
FIG. 7 is a perspective view showing a manufacturing apparatus used to manufacture the light guide according to an exemplary embodiment of the present invention;
FIG. 8 is an exploded perspective view showing a display device according to an exemplary embodiment of the present invention;
FIG. 9 is a block diagram showing a display device according to an exemplary embodiment of the present invention;
FIG. 10 is a view showing a left-eye image displayed on a display device according to an exemplary embodiment of the present invention;
FIG. 11 is a timing diagram showing an operation of the display device when the left-eye image is displayed on the display device;
FIG. 12 is a perspective view showing a backlight unit according to an exemplary embodiment of the present invention;
FIG. 13 is a view showing a portion of the backlight unit shown in FIG. 12;
FIG. 14 is a partially enlarged perspective view showing a portion of the backlight unit shown in FIG. 12;
FIGS. 15A and 15B are views showing luminosity of the backlight unit in the conventional backlight unit and the backlight unit according to an exemplary embodiment of the present invention;
FIG. 16 is a graph showing the luminosity of the backlight unit in the conventional backlight unit and the backlight unit according to an exemplary embodiment of the present invention;
FIGS. 17A and 17B are views traveling paths of the light incident to the conventional backlight unit and the backlight unit according to an exemplary embodiment of the present invention; and
FIG. 18 is a graph showing the tendency of rectilinear propagation of the light incident to the conventional backlight unit and the backlight unit according to an exemplary embodiment of the present invention.

### DETAILED DESCRIPTION

It will be understood that when an element or layer is referred to as being "on", "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numbers refer to like elements throughout. As used herein, the term "and/or" includes any and all combinations of one or more of the associated listed items.

It will be understood that, although the terms first, second, etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present invention.

Spatially relative terms, such as "beneath", "below", "lower", "above", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms, "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, the present invention will be explained in detail with reference to the accompanying drawings.

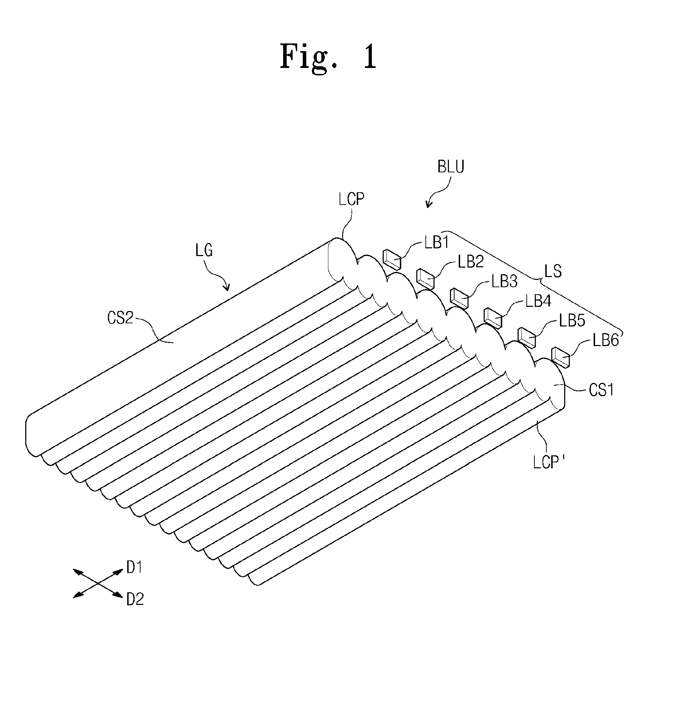

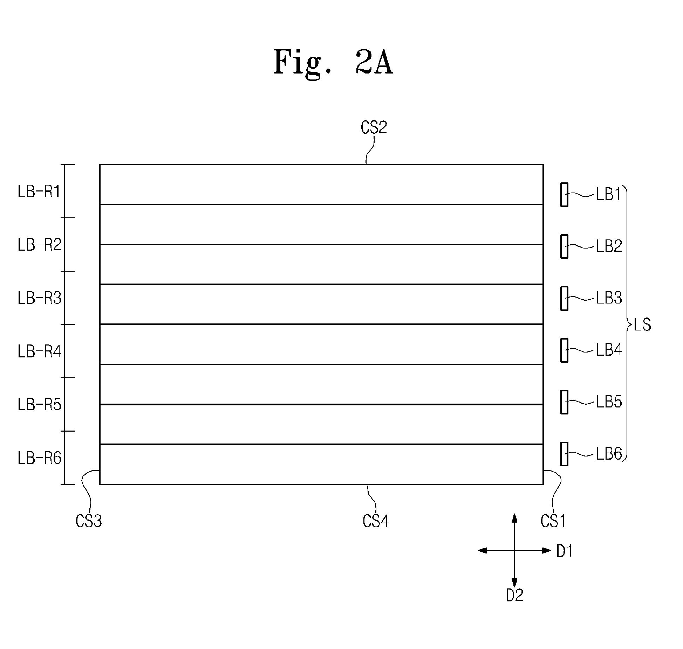

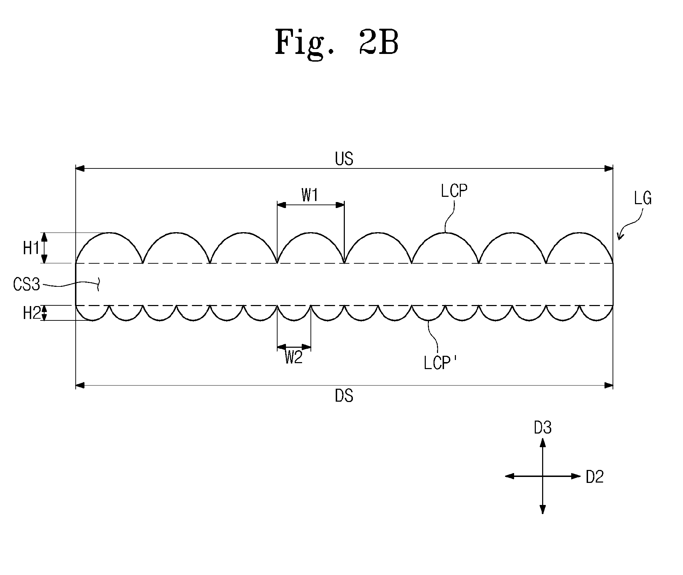

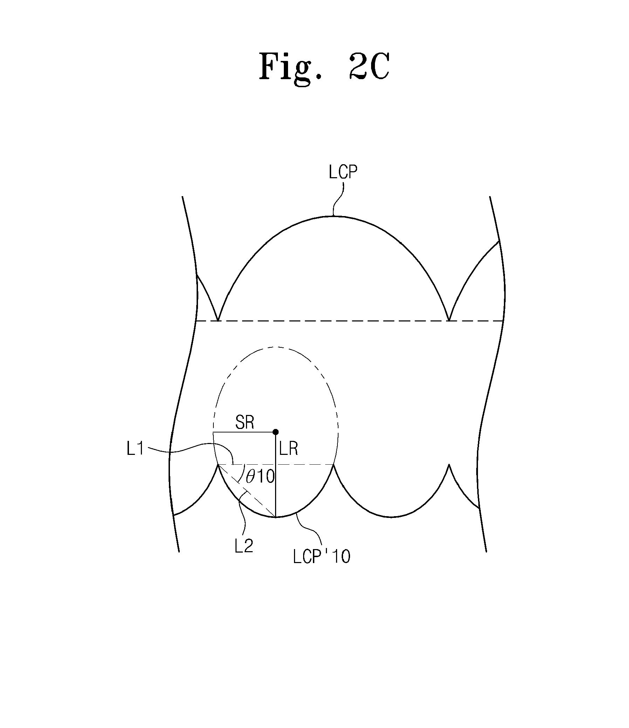

FIG. 1 is a perspective view showing a backlight unit according to an exemplary embodiment of the present invention and FIGS. 2A to 2C are views showing portions of the backlight unit shown in FIG. 1. FIG. 2A shows a plan view of the backlight unit, FIG. 2B shows a side view of the backlight unit, and FIG. 2C shows an enlarged portion of the FIG. 2B.

Referring to FIG. 1, a backlight unit BLU includes a light source LS emitting light and a light guide LG receiving the light from the light source LS and guiding the light.

Referring to FIGS. 1, 2A, and 2B, the light source LS includes a plurality of light emitting blocks LB1 to LB6. As an example, six light emitting blocks LB1 to LB6 are shown in FIGS. 1 and 2A.

The light emitting blocks LB1 to LB6 provide the light to different areas of the light guide LG The light emitting blocks LB1 to LB6 are disposed to face a side surface of the light guide LG and arranged in a line. Each of the light emitting blocks LB1 to LB6 may include a plurality of light emitting devices. Each light emitting device may be, but not limited to, a light emitting diode.

The light source LS may further include a circuit board (not shown). The light emitting blocks LB1 to LB6 are mounted on the circuit board. That is, the light emitting devices included in the light emitting blocks LB1 to LB6 are mounted on the circuit board. Control signals are applied to signal lines disposed on the circuit board to turn on and off the light emitting blocks LB1 to LB6. Additionally, active devices used to control the light emitting blocks LB1 to LB6 are further mounted on the circuit board.

The light guide LG includes a first surface US, a second surface DS, and a plurality of connection surfaces CS1 to CS4 to connect the first surface US and the second surface DS. As shown in FIG. 1 and 2A, the light guide LG has a rectangular plate shape, but the shape of the light guide LG should not be limited to the rectangular plate shape.

Any one of the connection surfaces CS1 to CS4 faces the light source LS. In the present exemplary embodiment, the connection surface CS1 facing the light source LS will be referred to as a light incident surface. In addition, another connection surface CS3 facing the light incident surface will be referred to as a light opposite surface. The light incident surface CS1 and the light opposite surface CS3 may have a length shorter than that of other connection surfaces CS2 and CS4.

In the present exemplary embodiment, other connection surfaces CS2 and CS4 will be referred to as first and second connection surfaces CS2 and CS4. The first and second connection surfaces CS2 and CS4 connect the light incident surface CS1 and the light opposite surface CS3 and face each other. In the present exemplary embodiment, the light guide LG includes four connection surfaces CS1 to CS4, but the number of the connection surfaces may be changed in accordance with the shape of the light guide LG

The first surface US serves as a surface from which the light incident to the light incident surface CS1 exits. The second surface DS is a surface facing the first surface US in a thickness direction D3 of the light guide LG

As shown in FIG. 2A, the light guide LG is divided into a plurality of light emitting areas LB-R1 to LB-R6 arranged in a second direction D2 when viewed in a plan view. The light emitting areas LB-R1 to LB-R6 respectively correspond to the light emitting blocks LB1 to LB6.

As shown in FIGS. 1, 2A, and 2B, the first surface US includes a plurality of light guiding patterns LGP. The plurality of light guiding patterns may be a plurality of lenticular patterns LCP (hereinafter, referred to as first lenticular patterns). The first lenticular patterns LCP are extended in the first direction D1 and arranged in the second direction D2 crossing the first direction D1. Each of the first lenticular patterns LCP has a curved surface.

In addition, the second surface DS includes a plurality of light guide patterns LGP. In the present exemplary embodiment, the light guide patterns LGP may be a plurality of lenticular patterns LCP' (hereinafter, referred to as second lenticular patterns). The second lenticular patterns LCP' are extended in the first direction D1 and arranged in the second direction D2.

As shown in FIGS. 1, 2A, and 2B, the first lenticular patterns LCP are successively arranged and the second lenticular patterns LCP' are successively arranged. In addition, the first and the second lenticular patterns LCP and LCP' have a length the same as the length of the light guide LG in the first direction D1.

The first lenticular patterns LCP have the same width W1 (hereinafter, referred to as first width). The second lenticular patterns LCP' have the same width W2 (hereinafter, referred to as second width). The first and the second widths W1 and W2 may be different from each other. As shown in FIG. 2B, the first width W1 may be greater than the second width W2.

The first lenticular patterns LCP have the same height H1 (hereinafter, referred to as first height) and the second lenticular patterns LCP' have the same height H2 (hereinafter, referred to as second height). The first height H1 is measured at a peak of the first lenticular patterns LCP and the second height H2 is measured at a peak of the second lenticular patterns LGP'. The first and the second heights H1 and H2 may be different from each other. As shown in FIG. 2B, the first height H1 may be greater than the second height H2.

As shown in FIG. 2C, a perimeter of each of the first lenticular patterns LCP and each of the second lenticular patterns LCP' has a shape corresponding to an arc of an ellipse.

The ellipse defined by the perimeter of the first lenticular patterns LCP has an area greater than that of the ellipse defined by the outer lines of the second lenticular lines LCP'. Hereinafter, one second lenticular pattern LCP'10 of the second lenticular patterns LCP' will be described in detail.

As shown in FIG. 2C, the perimeter of the second lenticular pattern LCP' 10 corresponds to an arc of the ellipse having a long diameter LR and a short diameter SR. The ellipse is represented by a dash dot dot line in FIG. 2C.

Here, a ratio between the long diameter LR and the short diameter SR may be 2:1. In addition, an angle θ10 between a line L1 connected between both ends of the arc of the second lenticular pattern LCP'10 and a line L2 connected between one end of the arc and the peak of the second lenticular pattern LCP'10 is smaller than about 45 degrees.

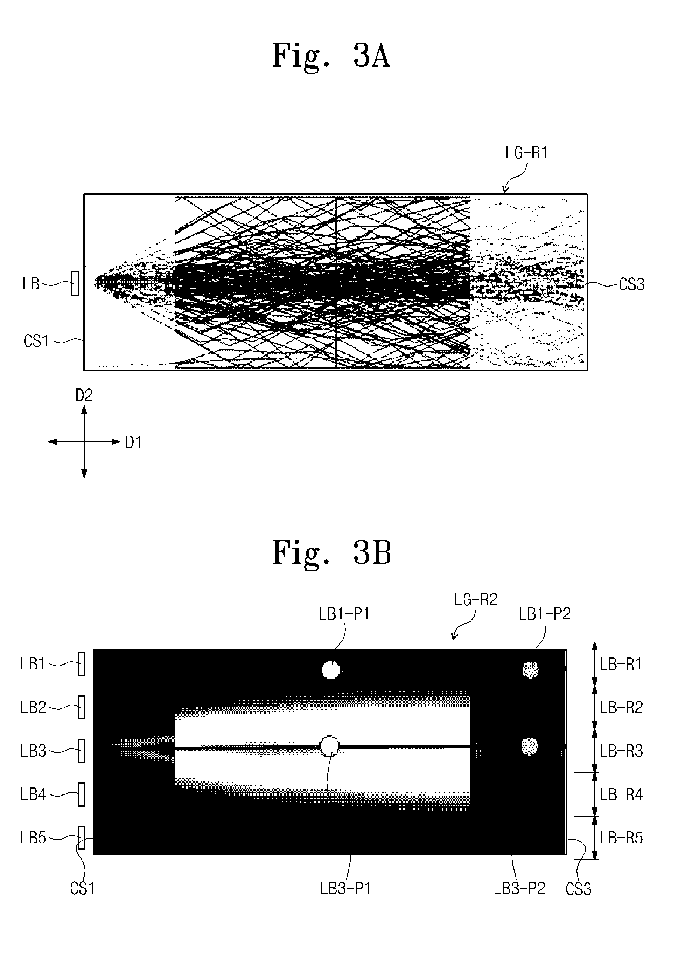

FIGS. 3A and 3B are views explaining a tendency of rectilinear propagation of light which is incident into the light guide.

Referring to FIG. 3A, the light exiting from any one light emitting block LB and incident into the light incident surface CS1 of the light guide LG-R1 travels toward the light opposite surface CS3. The light incident into the light incident surface CS1 tends to diffuse to the second direction D2 while traveling to the first direction D1. The tendency of rectilinear propagation of the light traveling to the first direction D1 is determined depending on the diffusivity of the light to the second direction D2.

FIG. 3B shows the light guide LG-R2 divided into five light emitting areas LB-R1 to LB-R5 respectively corresponding to five light emitting blocks LB1 to LB5. The tendency of rectilinear propagation of the light exiting from an n-th light emitting block of the light emitting blocks LB1 to LB5 and traveling to an n-th light emitting area of the light guide LG-R2 is calculated by comparing brightness of the light measured in the n-th light emitting area with brightness of the light measured in an (n-2)th or (n+2)th light emitting area.

For instance, as shown in FIG. 3B, the tendency of rectilinear propagation of the light provided to the light guide LG-R2 from the third light emitting block LB3 is calculated by comparing the brightness of the light measured in the third light emitting area LB-R3 with the brightness of the light measured in the first light emitting area LB-R1. A distance between the light incident surface CS1 and the point at which the brightness of the light of the third light emitting area LB-R3 is measured is equal to a distance between the light incident surface CS1 and the point at which the brightness of the light of the first light emitting area LB-R1 is measured. That is, the distance between a first point LB3-P1 and the light incident surface CS1 is equal to the distance between a third point LB1-P1 and the light incident surface CS1. In addition, the distance between a second point LB3-P2 and the light incident surface CS1 is equal to the distance between a fourth point LB1-P2 and the light incident surface CS1.

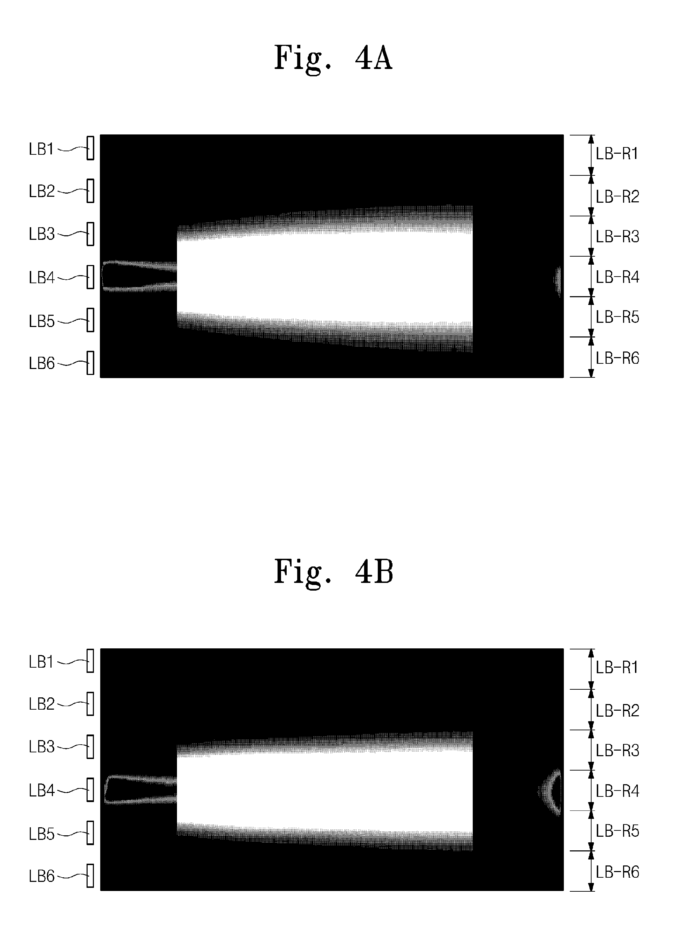

FIGS. 4A and 4B are views showing traveling paths of the light in a conventional backlight unit and a backlight unit according to an exemplary embodiment of the present invention, respectively. FIGS. 4A and 4B show the traveling paths of the light exiting from the fourth light emitting block LB4 of the light emitting blocks LB1 to LB6. In this case, the conventional backlight unit includes a light guide on which the second lenticular patterns LGP (refer to FIG. 1) are not formed. That is, the conventional backlight unit includes a flat second surface.

Referring to FIGS. 4A and 4B, the diffusivity of the light is relatively small and the tendency of rectilinear propagation of the light is relatively large in the backlight unit BLU according to the exemplary embodiment when compared to those of the conventional backlight unit. This is because the second lenticular patterns LGP (refer to FIG. 1 to 2C) prevents the light from diffusion.

According to the light guide LG of the backlight unit BLU according to the exemplary embodiment, although a portion of the light traveling through the fourth light emitting area LB-R4 is diffused to adjacent light emitting areas LB-R3 and LB-R5, the diffused light is reflected by the second lenticular patterns LCP' disposed in the fourth light emitting area LB-R4 and the adjacent light emitting areas LB-R3 and LB-R5. Thus, the light diffused to the adjacent light emitting areas LB-R3 and LB-R5 are returned to the fourth light emitting area LB-R4 again.

The light traveling through the fourth light emitting area LB-R4 exits through the first surface US. The tendency of rectilinear propagation of the light exiting from the fourth light emitting area LB-R4 depends on the tendency of rectilinear propagation of the light traveling through the fourth light emitting area LB-R4. Therefore, the backlight unit BLU may generate the light through desired light emitting area without exerting any influence on the adjacent light emitting areas.

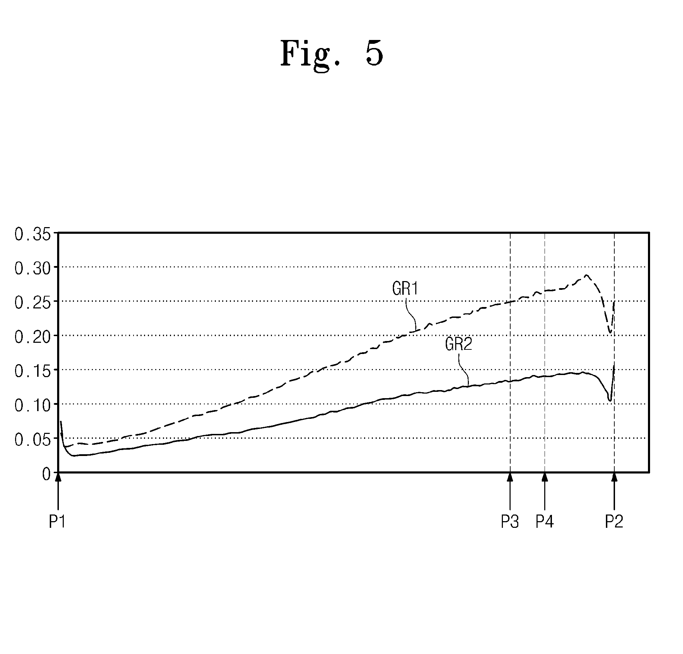

FIG. 5 is a graph showing the tendency of rectilinear propagation of the light in the conventional backlight unit and the backlight unit according to an exemplary embodiment of the present invention. In FIG. 5, an x-axis represents a relative distance of the point at which the brightness of the light is measured with respect to the light incident surface CS1 and the light opposite surface CS3, and a y-axis represents a value obtained by dividing the brightness of the light measured in the (n-2)th or (n+2)th light emitting area by the brightness of the light measured in the n-th light emitting area.

A first graph GR1 represents the divided value of the conventional backlight unit and a second graph GR2 represents the divided value of the backlight unit according to the present exemplary embodiment. A first point P1 on the x-axis represents the light incident surface CS1 and a second point P2 on the x-axis represents the light opposite surface CS3.

A third point P3 on the x-axis is a position at which a distance ratio between the light incident surface CS1 and the light opposite surface CS3 is 6:1, and a fourth point P4 on the x-axis is a position at which a distance ratio between the light incident surface CS1 and the light opposite surface CS3 is 9:1. The divided value of the conventional backlight unit at the third point P3 is about 0.255 and the divided value of the backlight unit BLU according to the present exemplary embodiment at the third point P3 is about 0.137. The divided value of the conventional backlight unit at the fourth point P4 is about 0.268 and the divided value of the backlight unit BLU according to the present exemplary embodiment at the fourth point P4 is about 0.143.

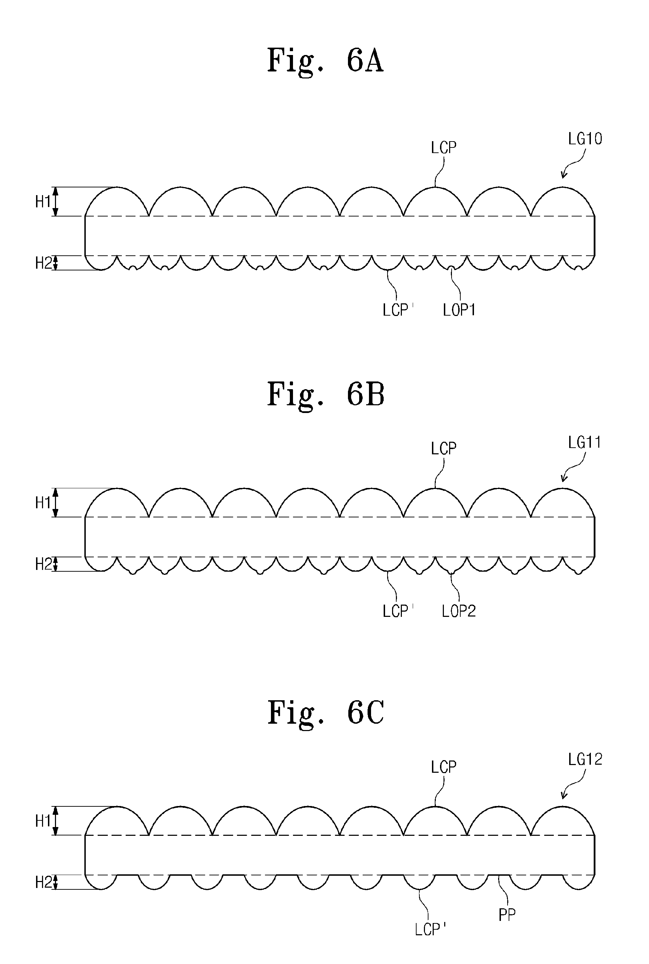

FIGS. 6A to 6E are views showing portions of the backlight unit according to an exemplary embodiment of the present invention. FIGS. 6A to 6E show cross sections of light guides LG10 to LG14 in the second direction D2.

Referring to FIGS. 6A and 6B, the light guides LG10 and LG11 include light exiting patterns LOP1 and LOP2. When the incident light traveling toward the light opposite surface CS3 reaches the light exiting patterns LOP1 and LOP2, the path of the light traveling toward the light opposite surface CS3 is changed. The light reaching the light exiting patterns LOP1 and LOP2 exits through the first surface US. The light exiting patterns LOP1 and LOP2 are irregularly arranged. Meanwhile, according to another exemplary embodiment, the light exiting patterns LOP1 and LOP2 may be regularly arranged along the second lenticular patterns LCP'.

As shown in FIG. 6A, the light guide LG10 includes engraved light exiting patterns LOP1. As shown in FIG. 6B, the light guide LG11 includes embossed light exiting patterns LOP2.

Referring to FIG. 6C, the second lenticular patterns LCP' of the light guide LG12 are spaced apart from each other in the second direction D2. A flat surface portion PP is disposed between the second lenticular patterns LCP'. That is, the second surface DS includes the second lenticular patterns LCP' and the flat surface portion PP. Although not shown in figures, the light exiting patterns LOP1 and LOP2 may be disposed on the flat surface portion PP.

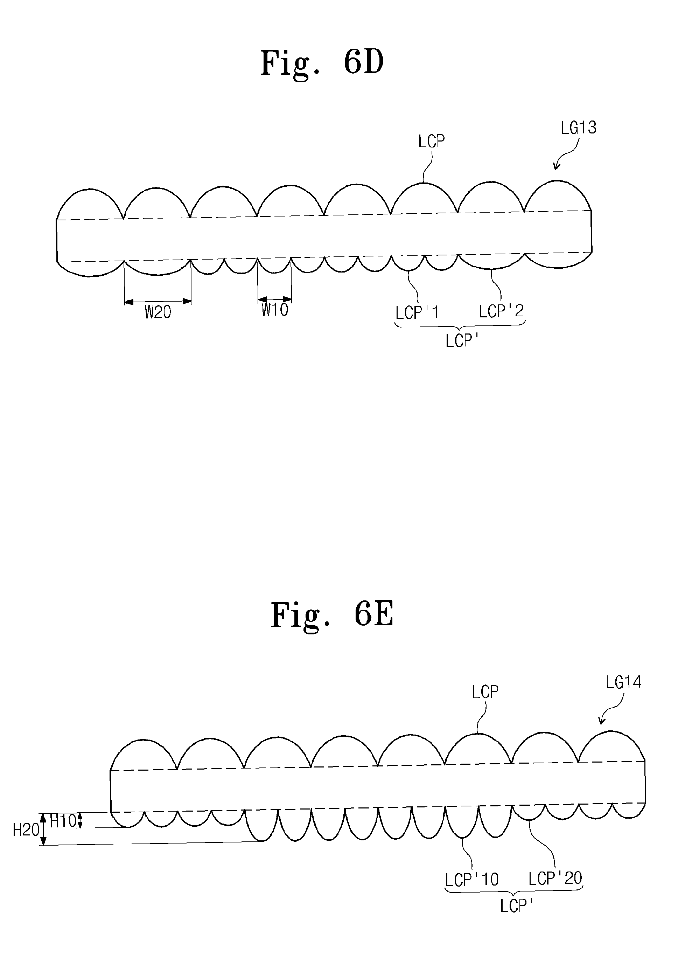

Referring to FIGS. 6D and 6E, the light guides LG13 and LG14 may include different second lenticular pattern groups. As shown in FIG. 6D, the light guide LG13 includes the second lenticular pattern groups having different widths. Among the second lenticular patterns LCP', the width W10 of the portion of the second lenticular patterns LCP' is different from the width W20 of the second lenticular patterns LCP'.

As shown in FIG. 6E. the light guide LG14 includes the second lenticular pattern groups having different heights. Among the second lenticular patterns LCP', the height H10 of the portion of the second lenticular patterns LCP' is different from the height H20 of the second lenticular patterns LCP'.

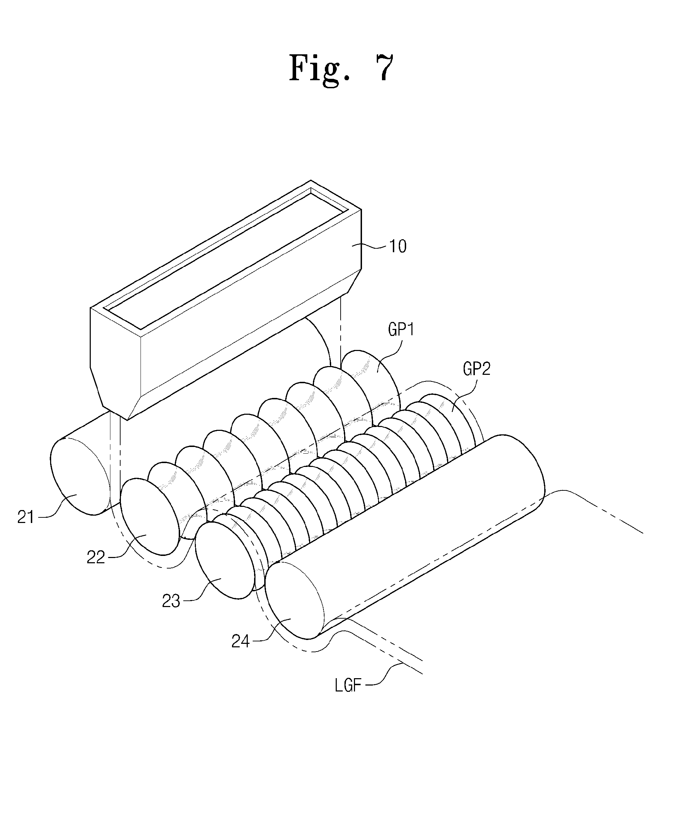

FIG. 7 is a perspective view showing a manufacturing apparatus used to manufacture the light guide according to an exemplary embodiment of the present invention. The manufacturing apparatus shown in FIG. 7 manufactures the light guide using an extrusion method. The manufacturing apparatus includes a resin material supplier 10 and four rollers 21 to 24, e.g., first, second, third, and fourth rollers. The number of the rollers 21 to 24 should not be limited to four.

The resin material supplier 10 contains a resin material such as polymethylmethacrylate (PMMA) therein. In addition, the resin material supplier 10 extrudes the resin material to provide a light guide film LGF to between the first and second rollers 21 and 22. Since the resin material is heated by a heat source (not shown) attached to the resin material supplier 10, the light guide film LGF is in a high temperature. The term of "high temperature" used herein means a temperature at which the light guide film formed of the resin material is not decomposed and the shape of the light guide film is deformable by the external pressure.

When the light guide film LGF provided from the resin material supplier 10 passes through the four rollers 21 to 24, the first lenticular patterns LCP and the second lenticular patterns LCP' are formed. The light guide film LGF in the high temperature enters between the first and second rollers 21 and 22. The second roller 22 includes a plurality of first groove portions GP1 disposed on an outer surface thereof. Due to the first groove portions GP1, a shape of one surface of the light guide film LGF is changed. That is, the first lenticular patterns LCP are formed on the surface of the light guide film LGF.

The light guide film LGF extruded from between the first and second rollers 21 and 22 enters to between the second and third rollers 22 and 23. The third roller 23 includes a plurality of second groove portions GP2 disposed on an outer surface thereof. Due to the second groove portions GP2, a shape of the other surface of the light guide film LGF is changed. That is, the second lenticular patterns LCP' are formed on the other surface of the light guide film LGF. In this case, the second groove patterns GP2 may further include concave or convex patterns so as to form the embossed light exiting patterns LOP2 or the engraved light exiting patterns LOP1, respectively (refer to FIG. 6B). The position of the second roller 22 and the third roller 23 is inter-changeable. The position of the fourth roller 24 is inter-changeable to the position of the second roller 22 or the third roller 23.

Meanwhile, the light guide according to the present exemplary embodiment may be formed without using the manufacturing apparatus as shown in FIG. 7.. For instance, the first lenticular patterns LCP and the second lenticular patterns LCP' may be respectively printed on both surfaces of the light guide film LGF through a printing method, e.g., a mask printing method, an imprinting method, etc. In addition, the engraved light exiting patterns LOP1 (refer to FIG. 6A) may be formed by a laser irradiation method.

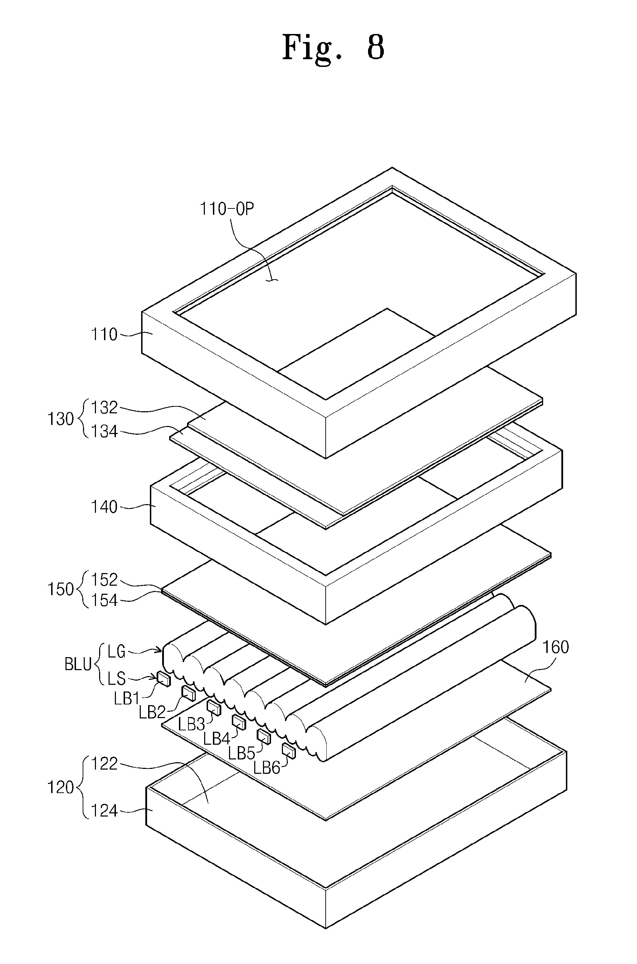

FIG. 8 is an exploded perspective view showing a display device according to an exemplary embodiment of the present invention.

Referring to FIG. 8, a display device includes an upper protective member 110, a lower protective member 120, a display panel 130, and a backlight unit BLU.

The upper protective member 110 and the lower protective member 120 correspond to outer portions of the display device. The upper protective member 110 and the lower protective member 120 are coupled to each other to accommodate other elements therein.

The upper protective member 110 is disposed on the display panel 130. The upper protective member 110 includes an opening 110-OP formed therethrough to expose a portion of the display panel 130. The upper protective member 110 covers a non-display area of the display panel 130.

The lower protective member 120 is disposed under the backlight unit BLU. The lower protective member 120 includes a bottom portion 122 and a sidewall portion 124 bent upward from the bottom portion 122. The backlight unit BLU is accommodated in a space defined by the bottom portion 122 and the sidewall portion 124.

The display panel 130 displays the image. The display panel 130 is a transmissive or transflective type display panel. For instance, the display panel 130 may be, but not limited to, a liquid crystal display panel or an electrophoretic display panel. In the present exemplary embodiment, the liquid crystal display panel including a first substrate 132 and a second substrate 134 will be described as a representative example. A liquid crystal layer (not shown) is disposed between the first substrate 132 and the second substrate 134.

The display panel 130 includes a plurality of pixels arranged in plural pixel rows. The display panel 130 further includes a driving chip (not shown) to apply driving signals to the pixels. The driving chip includes a timing controller, a data driver, and a gate driver.

The backlight unit BLU includes the light source LS including the light emitting blocks LB1 to LB6 and the light guide LG guiding the light from the light source LS to the display panel 130. The backlight unit BLU may include the light guide described with reference to FIGS. 1 to 7.

The display device may further include a support member 140 to support the display panel 130. The support member 140 may be, but not limited to, a chassis member overlapped with the non-display area. The support member 140 has a rectangular shape. The support member 140 includes an opening formed therethrough. The support member 140 is disposed under the display panel 130 to support the display panel 130.

The display device may further include an optical sheet 150 and a reflective sheet 160 so as to improve the light efficiency of the light provided to the display panel 130.

The optical sheet 150 is disposed between the light guide LG and the display panel 130. The optical sheet 150 includes a prism sheet 154 and a protective sheet 152 sequentially stacked on the light guide LG

The prism sheet 154 collects the light exiting from the first surface US of the light guide LG in order to allow the light to travel in a vertical direction with respect to a display surface of the display panel 130 disposed on the prism sheet 154. The light passing through the prism sheet 154 is vertically incident to the display panel 130. The protective sheet 152 is disposed on the prism sheet 154. The protective sheet 152 protects the prism sheet 154 from external impacts.

Meanwhile, although not shown in figures, the optical sheet 150 may further include a diffusion sheet to diffuse the light exiting from the first surface US of the light guide LG As an example, the diffusion sheet is disposed between the light guide LG and the prism sheet 154.

The reflective sheet 160 is disposed under the light guide LG The reflective sheet 160 reflects the light leaked from the second surface DS of the light guide LG, so that the reflected light is incident again to the light guide LG

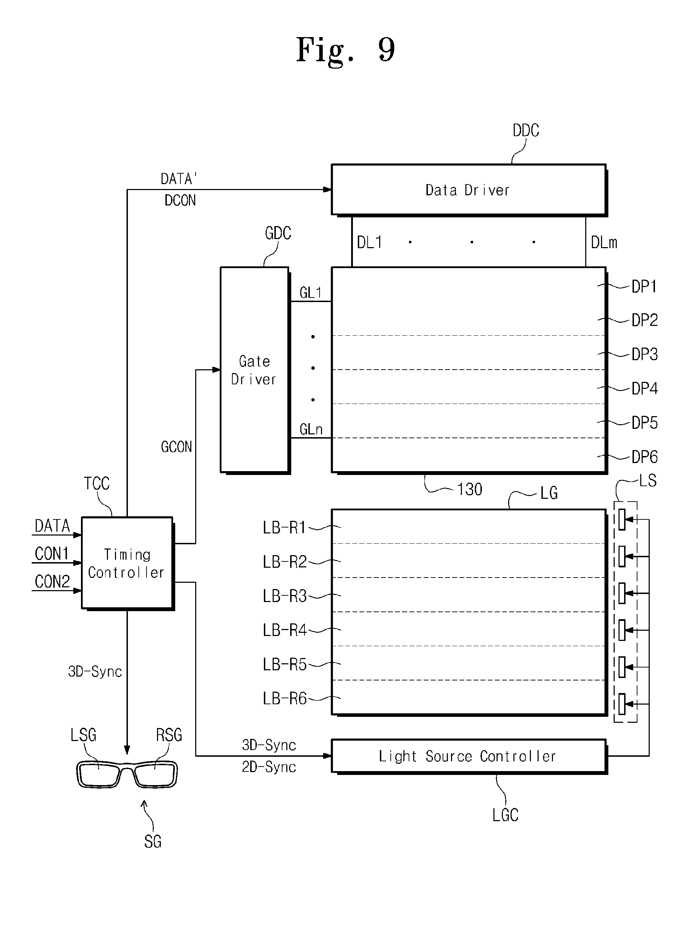

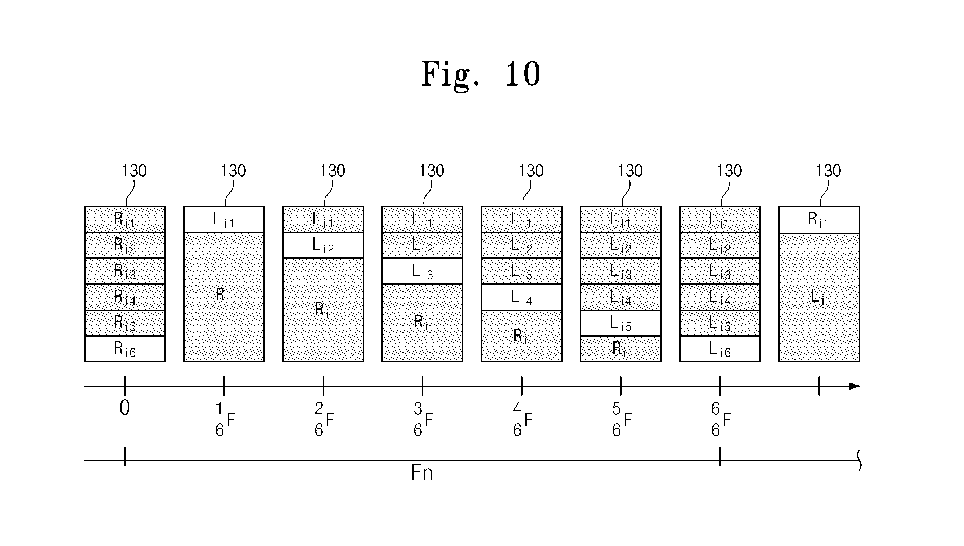

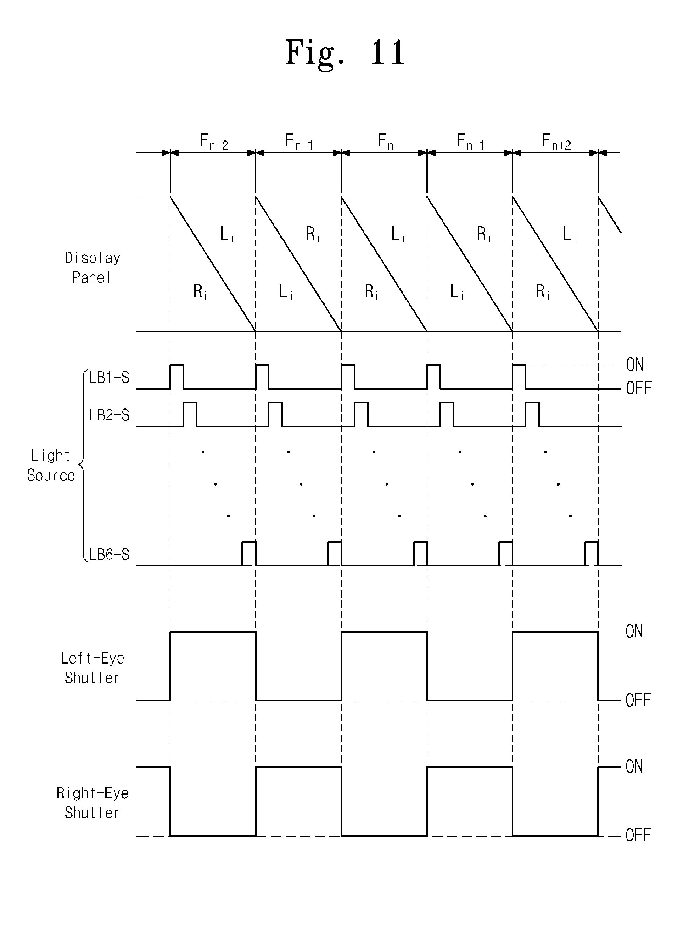

FIG. 9 is a block diagram showing a display device according to an exemplary embodiment of the present invention, FIG. 10 is a view showing a left-eye image displayed on a display device according to an exemplary embodiment of the present invention, and FIG. 11 is a timing diagram showing an operation of the display device when the left-eye image is displayed on the display device.

The display device displays a two-dimensional (2D) image in a 2D mode and alternately displays a left-eye image and a right-eye image in a three-dimensional (3D) mode. The left-eye image and the right-eye image, which are alternately displayed, are perceived to a user as a 3D iamge.

The display panel 130 includes a plurality of display areas DP1 to DP6. The display areas DP1 to DP6 correspond to the light emitting areas LB-R1 to LB-R6 of the light guide LG, respectively.

Each of the display areas DP1 to DP6 includes a portion of the pixel rows of the display panel 130. When all the pixel rows are scanned, an image corresponding to one frame is generated.

The display panel 130 is operated by the timing controller TCC, the gate driver GDC, and the data driver DDC. In addition, the light source LD is controlled by a light source controller LGC.

The timing controller TCC receives image signals DATA. The image signals DATA may be 2D image signals or 3D image signals. When the display panel 130 is operated in the 2D mode, the timing controller TCC receives a first control signal CON1, and when the display panel 130 is operated in the 3D mode, the timing controller TCC receives a second control signal CON2. For instance, each of the first and second control signals CON1 and CON2 includes a horizontal synchronization signal, a vertical synchronization signal, a main clock signal, and a data enable signal.

The timing controller TCC converts a data format of the image signals DATA to a data format appropriate to an interface between the data driver DDC and the timing controller TCC and provides the converted image signals DATA' to the data driver DCC. In addition, the timing controller TCC applies a data control signal DCON, e.g., an output start signal, a horizontal start signal, a horizontal clock signal, a polarity inversion signal, etc., to the data driver DCC and applies a gate control signal GCON, e.g., a vertical start signal, a vertical clock signal, a vertical clock bar signal, etc., to the gate driver GDC.

The gate driver GDC sequentially applies gate voltages to the pixel rows. The data driver DDC outputs data voltages corresponding to the converted image signals DATA' in response to the data control signal DCON. Each of the pixel rows receives the data voltages.

The light source controller LGC controls the light source LS. The light source controller LGC is operated in synchronization with the display panel 130. The light source controller LGC receives a 2D mode synchronization signal 2D-sync and a 3D mode synchronization signal 3D-Sync.

The light source controller LGC substantially and simultaneously turns on or off the light emitting blocks LB1 to LB6 in response to the 2D mode synchronization signal 2D-Sync. The light source controller LGC switches the light emitting blocks LB1 to LB6 in response to the 3D mode synchronization signal 3D-Sync. For instance, the light source controller LGC sequentially turns on or off the light emitting blocks LB1 to LB6. In the present exemplary embodiment, the 2D mode synchronization signal 2D-Sync may be one of the signals included in the first control signal CON1, and the 3D mode synchronization signal 3D-Sync may be one of the signals included in the second control signal CON2.

A shutter glasses includes a left-eye shutter LSG and a right-eye shutter RSG The shutter glasses SG is operated in synchronization with the display panel 130 when the display panel 130 is operated in the 3D mode.

The shutter glasses SG receives the 3D mode synchronization signal from the timing controller TCC. The shutter glasses SG opens or closes the left-eye shutter LSG and the right-eye shutter RSG in response to the 3D mode synchronization signal 3D-Sync.

As shown in FIG. 10, the left-eye image displayed in any one frame period Fₙ is formed by a sum of a plurality of left-eye images Lᵢ₁ to Lᵢ₆. For instance, the left-eye image is formed by a sum of six left-eye images Lᵢ₁ to Lᵢ₆.

When the light is provided to the first display area DP1 from the first light emitting area LB-R1 at a first time point 1/6Fof the frame period Fₙ, the first portion left-eye image Lᵢ₁ is generated. Then, the second portion left-eye image Lᵢ₂ to the sixth portion left-eye image Lᵢ₆ are sequentially generated in the second display area DP2 to the sixth display area DP6. When the second portion left-eye image Lᵢ₂ is displayed in the second display area DP2 at a second time point 2/6F, the first portion left-eye image Lᵢ₁ is not displayed.

The user perceives the left-eye image obtained by combination of the first portion left-eye image Lᵢ₁ to the sixth portion left-eye image Lᵢ₆, which pass through the left-eye shutter LSG The right-eye image is generated by the same way during a next frame period following the one frame period Fn. The user perceives the right-eye image passing through the right-eye shutter RSG during the next frame period.

Referring to FIG. 11, the light emitting blocks LB1 to LB6 are sequentially turned on or off in each frame period Fₙ₋₂ to Fₙ₊₂. Among the light emitting blocks, an i-th (i is an integer number equal to or larger than 2) light emitting block is turned on when an (i-1)th light emitting block is turned off. As shown in FIG. 11, a rising edge of a second switching signal LB2-S applied to the second light emitting block LB2 is generated at a falling edge of a first switching signal LB1-S applied to the first light emitting block LB 1.

Referring to FIGS. 9 and 10, when the light provided from the first light emitting block LB1 is diffused to other light emitting areas rather than the first light emitting area LB-R1 while the first portion left-eye image Lᵢ₁ is generated at the first time point 1/6F, a portion of the right-eye image Rᵢ may be generated. As a result, the user perceives the portion of the right-eye image Rᵢ through the left-eye shutter LSG That is, the user perceives the portion of the right-eye image Rᵢ displayed in the second display area DP2 adjacent to the first display area DP1, which is undesired right-eye image Rᵢ (a crosstalk phenomenon).

Since the display device an exemplary embodiment of the present invention includes the backlight unit BLU that emits the light having a high tendency of rectilinear propagation, the crosstalk phenomenon may be prevented. The light guide according to the exemplary embodiment secures the tendency of rectilinear propagation of the light incident thereto, which is higher than that of the conventional light guide, and thus the undesired image is not generated. In other words, the light provided to the first light emitting area LB-R1 from the first light emitting block BL1 is not diffused to the second light emitting area LB-R2, so that undesiable portion of the right-eye image Rᵢ is not generated during the left eye image is generated.

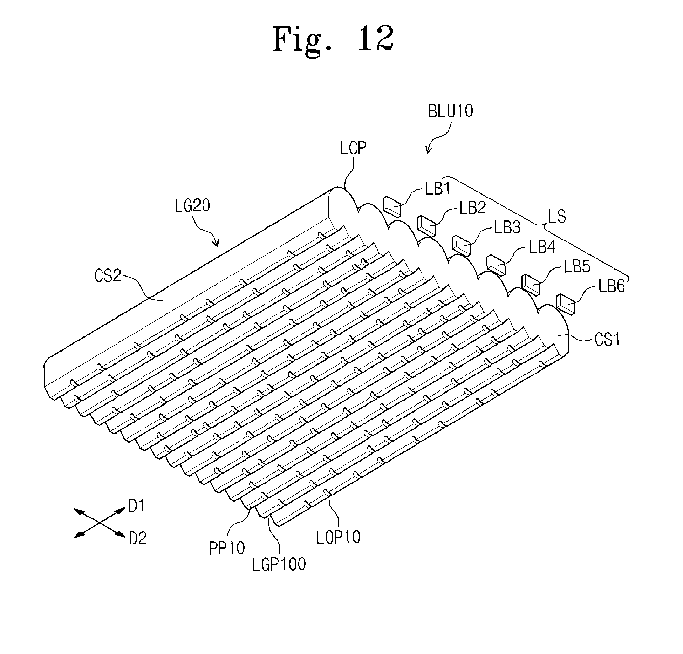

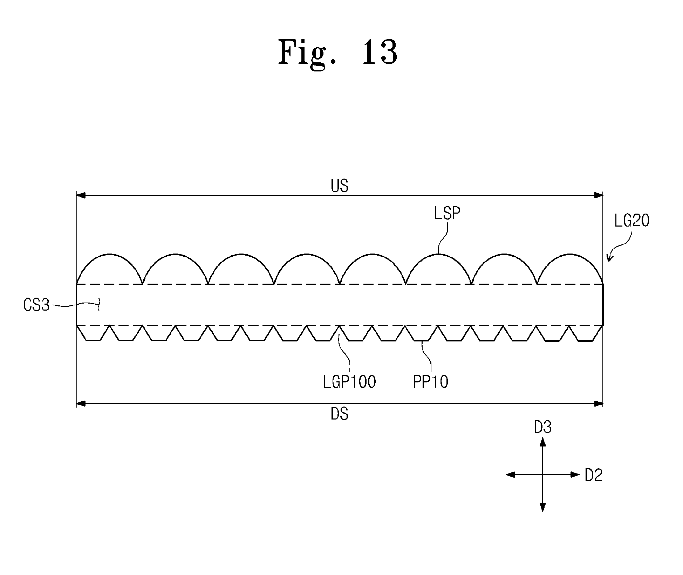

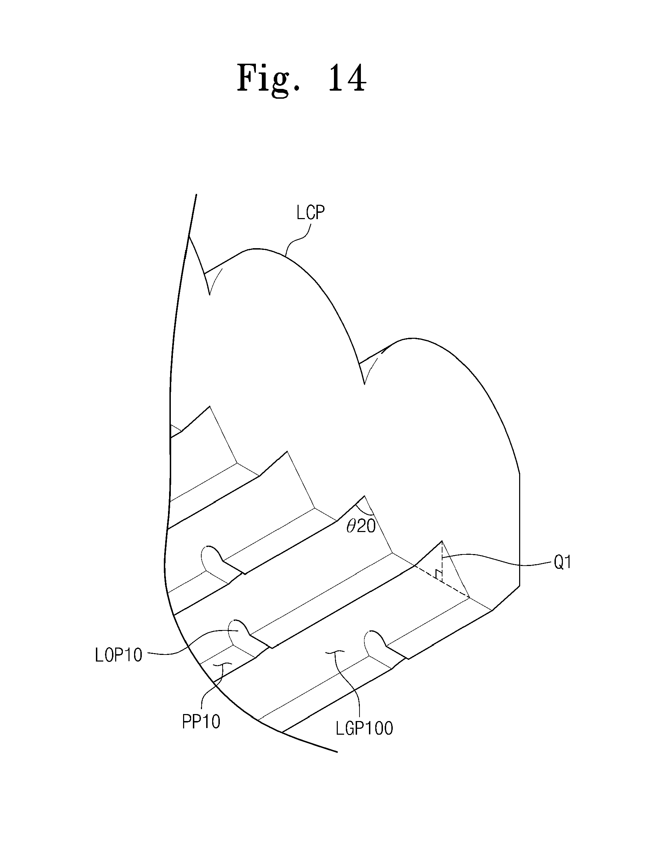

FIG. 12 is a perspective view showing a backlight unit according to an exemplary embodiment of the present invention. FIG. 13 is a view showing a portion of the backlight unit shown in FIG. 12. FIG. 14 is a partially enlarged perspective view showing a portion of the backlight unit shown in FIG. 12. In FIGS. 12 to 14, the same reference numerals denote the same elements in FIGS. 1 to 7, and thus detailed descriptions of the same elements will be omitted.

Referring to FIG. 12, a backlight unit BLU10 includes a light source LS including a plurality of light emitting blocks LB1 to LB6 and a light guide LG receiving the light from the light source LS and guiding the light.

The light guide LG includes a first surface US, a second surface DS, and a plurality of connection surfaces CS1 to CS4 to connect the first surface US and the second surface DS. The connection surfaces CS1 to CS4 includes a light incident surface CS1 and a light opposite surface CS3.

The first surface US serves as a surface from which the light incident to the light incident surface CS1 exits. The second surface DS is a surface facing the first surface US in a thickness direction D3 of the light guide LG

As shown in FIG. 12, the first surface US includes a plurality of lenticular patterns LCP. The lenticular patterns LCP are extended in the first direction D1 and arranged in the second direction D2 crossing the first direction D1. Each of the lenticular patterns LCP has a curved surface.

In addition, the second surface DS includes a plurality of light guide patterns LGP100. The plurality of light guide patterns LGP100 is recessed from the second surface. In the present exemplary embodiment, the light guide patterns LGP100 are formed by removing portions of the second surface DS. The light guide patterns LGP100 are extended in the first direction D1 and arranged in the second direction D2.

Referring to FIGS. 13 and 14, each of the light guide patterns LGP100 has a prism shape. The light guide patterns LGP100 have the same depths Q1. The depths Q1 are measured at peaks of the light guide patterns LGP100 having the prism shape. In a cross section, a vertical angle θ20 of each of the light guide patterns LGP100 having the prism shape is in a range from about 80 degrees to about 145 degrees.

The light guide patterns LGP100 having the prism shape have the same function as the second lenticular patterns LCP' (refer to FIG. 1). When the light traveling through a specific light emitting area is diffused to a light emitting area adjacent to the specific light emitting area, the light guide patterns LGP100 controls the diffused light to be collected to the specific light emitting area again.

Meanwhile, according to another exemplary embodiment, the light guide patterns having the prism shape may include a plurality of light guide pattern groups each having different depths. According to another exemplary embodiment, the light guide patterns LGP100 may include a plurality of light guide pattern groups each having different vertical angles.

The light guide patterns LGP100 are spaced apart from each other in the second direction D2. In this case, flat surface portions PP10 are disposed between the light guide patterns LGP100, respectively. That is, the second surface DS includes the light guide patterns LGP100 and the flat surface portions PP10.

The light exiting patterns LOP10 are disposed on the flat surface portions PP10. As shown in FIG. 14, engraved light exiting patterns LOP10 are disposed on the flat surface portions PP10. Each of the engraved light exiting patterns LOP10 has a depth of about 50 micrometers or less.

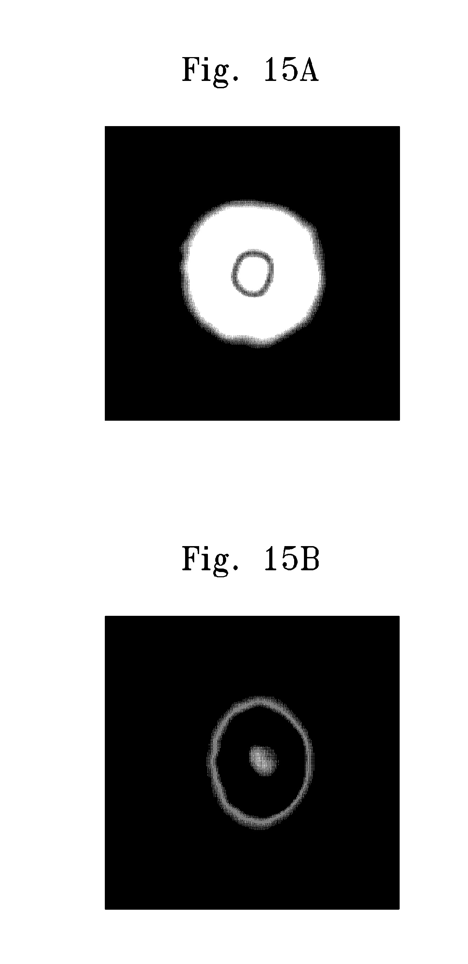

FIG. 15A is a view showing luminosity of the backlight unit in the conventional backlight unit and FIG. 15B is a view showing luminosity of the backlight unit according to an exemplary embodiment of the present invention. The luminosity is measured on the first surface of the light guide.

The backlight unit having the luminosity shown in FIG. 15A includes the lenticular patterns disposed on the first surface of the light guide and the second surface that is flat. That is, the conventional backlight unit does not include the light guide patterns having the prism shape.

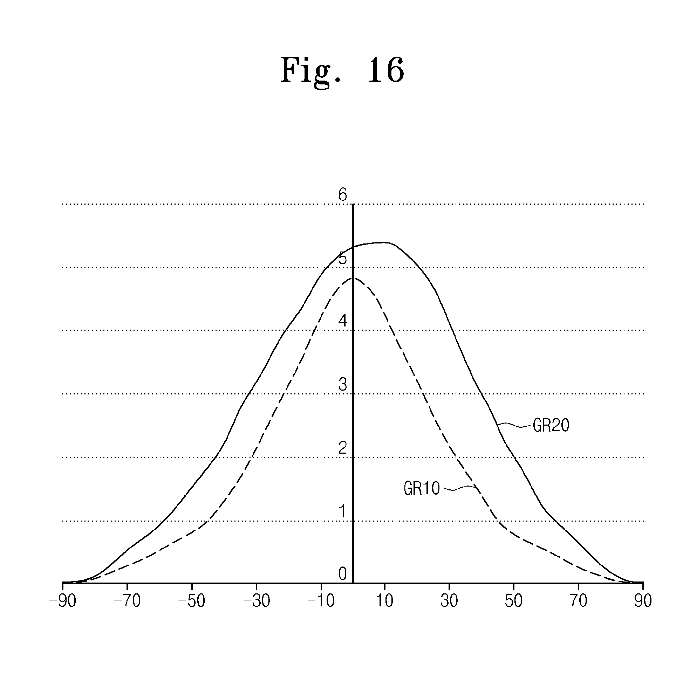

FIG. 16 is a graph showing the luminosity of the backlight unit in the conventional backlight unit and the backlight unit according to an exemplary embodiment of the present invention. In FIG. 16, an x-axis represents an angle between the light guide and the luminosity measuring device and a y-axis represents the relative intensity of the luminosity.

In FIG. 16, a first graph GR10 represents the luminosity of the conventional backlight unit and a second graph G20 represents the luminosity of the backlight unit according to the exemplary embodiment of the present invention. As shown in FIG. 16, the backlight unit according to the exemplary embodiment of the present invention has the luminosity increased by about 10% when compared to that of the conventional backlight unit.

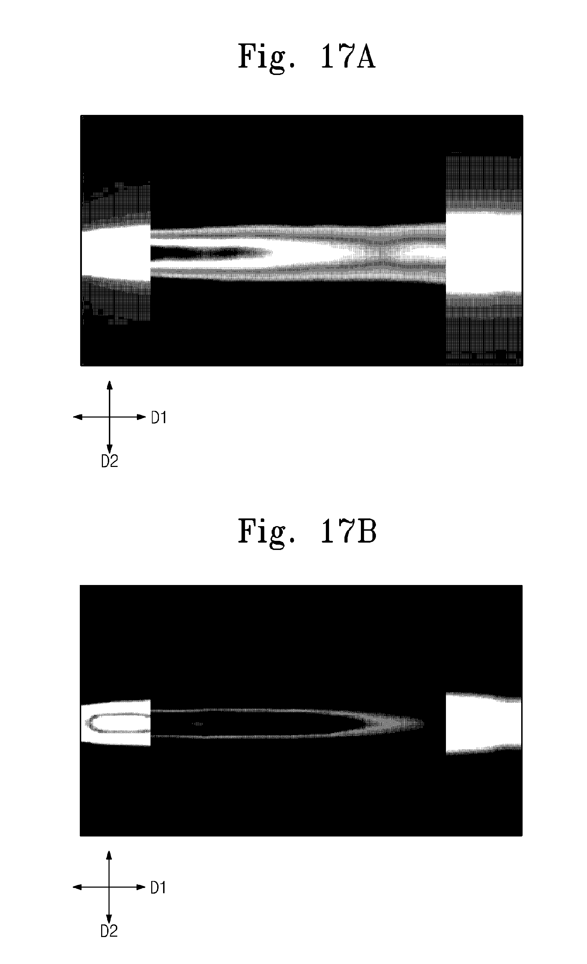

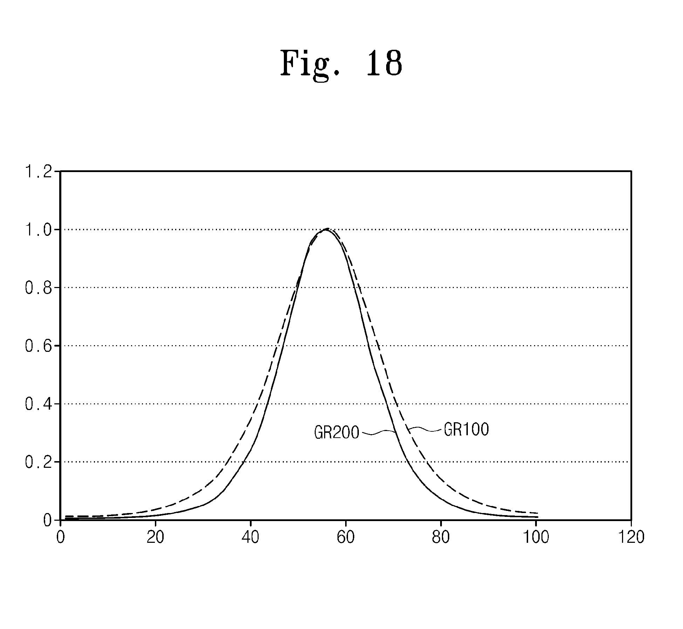

FIG. 17A is a view showing a traveling path of the light incident to the conventional backlight unit and FIG. 17B is a view showing a traveling path of the backlight unit according to an exemplary embodiment of the present invention. FIG. 18 is a graph showing the tendency of rectilinear propagation of the light incident to the conventional backlight unit and the backlight unit according to an exemplary embodiment of the present invention. In FIG. 18, an x-axis represents a distance in the second direction D2 of the light guide and a y-axis represents the relative intensity of the brightness.

In FIG. 18, a first graph GR100 represents the brightness of the conventional backlight unit and a second graph GR200 represents the brightness of the backlight unit according to the exemplary embodiment of the present invention. The first and second graphs GR100 and GR200 have a shape similar to a normal distribution.. The first and second graphs GR100 and GR200 represent the brightness decreased as the point at which the brightness is measured becomes far away from the center portion of the light guide.

As shown in FIG. 18, a width of the second graph GR200 is narrower than a width of the first graph GR100. This is because the tendency of rectilinear propagation of the light incident to the light guide of the backlight unit according to the present exemplary embodiment of the present invention is better than that of the light incident to the light guide of the conventional backlight unit.

Meanwhile, although not shown in figures, the backlight unit included in the display device shown in FIG. 8 may be replaced with the backlight unit described with reference to FIGS. 12 to 18. The control method of the backlight unit and the driving method of the display device according to the present exemplary embodiment are the same as those of the backlight unit and the display device described with reference to FIGS. 8 to 11, and thus detailed descriptions of the control and driving methods will be omitted.

Although the exemplary embodiments of the present invention have been described, it is understood that the present invention should not be limited to these exemplary embodiments but various changes and modifications can be made by one ordinary skilled in the art within the spirit and scope of the present invention as hereinafter claimed.

## Claims

1. A backlight unit comprising:
a light source that includes a plurality of light emitting blocks; and
a light guide that guides light provided from the light source and includes a first surface, a second surface facing the first surface, and a plurality of connection surfaces connecting the first surface and the second surface, at least one connection surface of the connection surfaces facing the light source,
wherein the first surface comprises a plurality of first lenticular patterns extended in a first direction and arranged in a second direction crossing the first direction, and the second surface comprises a plurality of light guiding patterns extended in the first direction and arranged in the second direction.

2. The backlight unit of claim 1, wherein the first lenticular patterns have a first width and the plurality of light guiding patterns have a second width smaller than the first width.

3. The backlight unit of claim 2, wherein the first lenticular patterns have a first height and the plurality of light guiding patterns have a second height smaller than the first height.

4. The backlight unit of claim 1, wherein the plurality of light guiding patterns are second lenticular patterns and perimeter of each of the second lenticular patterns has a shape corresponding to an arc of an ellipse.

5. The backlight unit of claim 4, wherein a width of the second lenticular patterns in one portion is different from a width of the second lenticular patterns in another direction.

6. The backlight unit of claim 5, wherein the second lenticular patterns comprises a light exiting pattern to output the light to the first surface.

7. The backlight unit of claim 4, wherein a height of the second lenticular pattern in one portion is different from a height of the second lenticular pattern in another portion.

8. The backlight unit of claim 7, wherein at least one portion of the second lenticular patterns comprises a light exiting pattern to output the light to the first surface.

9. The backlight unit of claim 4, wherein the second lenticular patterns are spaced apart from each other in the second direction.

10. The backlight unit of claim 1, wherein the plurality of light guiding patterns have a recessed portion from the second surface.

11. The backlight unit of claim 10, wherein each of the light guide patterns has a prism shape.

12. The backlight unit of claim 11, wherein a depth of the light guide pattern in one portion is different from a depth of the light guide pattern in another portion.

13. The backlight unit of claim 10, wherein the light guide patterns are spaced apart from each other in the second direction.

14. The backlight unit of claim 13, wherein the second surface further comprises a flat surface portion disposed between the light guide patterns and the flat surface portion comprises a light exiting pattern to output the light to the first surface.

15. The backlight unit of claim 14, wherein the light exiting pattern is engraved.

16. A display device comprising:
a light source that includes a plurality of light emitting blocks;
a light guide that guides light provided from the light source and includes a first surface, a second surface facing the first surface, and a plurality of connection surfaces connecting the first surface and the second surface, at least one connection surface of the connection surfaces facing the light source; and
a display panel that receives the guided light from the light guide and alternately displays a left-eye image and a right-eye image during successive frame periods in a three-dimensional mode,
wherein the first surface comprises a plurality of lenticular patterns extended in a first direction and arranged in a second direction crossing the first direction, and the second surface comprises a plurality of light guide patterns extended in the first direction and arranged in the second direction.

17. The display device of claim 16, wherein the light emitting blocks are arranged in the second direction along the one connection surface.

18. The display device of claim 17, wherein the light emitting areas are sequentially turned on in each frame period, and an i-th (i is an integer number equal to or larger than 2) light emitting block of the light emitting blocks is turned on when an (i-1)th light emitting block of the light emitting blocks is turned off.

19. The display device of claim 16, wherein each of the light guide patterns is a lenticular pattern having a curved surface.

20. The display device of claim 16, wherein each of the light guide patterns is a prism pattern recessed from the second surface.
